(19)

Europäisches
Patentamt

European
Patent Office

Office européen
des brevets

(11) **EP 3 694 893 B1**

(12) **EUROPEAN PATENT SPECIFICATION**

(45) Date of publication and mention
of the grant of the patent:
**05.04.2023 Bulletin 2023/14**

(21) Application number: **18783498.1**

(22) Date of filing: **12.10.2018**

(51) International Patent Classification (IPC):
***C08C 1/02*** *(2006.01)*     ***C08F 265/04*** *(2006.01)*
***C08F 279/04*** *(2006.01)*     ***C08F 279/06*** *(2006.01)*

(52) Cooperative Patent Classification (CPC):
**C08C 1/02; C08F 265/04; C08F 279/04;**
**C08F 279/06**

(86) International application number:
**PCT/EP2018/077886**

(87) International publication number:
**WO 2019/073041 (18.04.2019 Gazette 2019/16)**

(54) **PROCESS FOR PRODUCTION OF ELASTOMER AGGLOMERATE COMPOSITION**

VERFAHREN ZUR HERSTELLUNG EINER ELASTOMERAGGLOMERATZUSAMMENSETZUNG

PROCESSUS DE PRODUCTION D'UNE COMPOSITION D'AGGLOMÉRATS D'ÉLASTOMÈRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.10.2017 EP 17196276**

(43) Date of publication of application:
**19.08.2020 Bulletin 2020/34**

(73) Proprietor: **SABIC Global Technologies B.V.**
**4612 PX Bergen op Zoom (NL)**

(72) Inventors:
• **FERRARIS, Dane**
**6160 GA Geleen (NL)**
• **LI, Dejin**
**6160 GA Geleen (NL)**

• **NELSON, Mark Erik**
**6160 GA Geleen (NL)**
• **LOWRY, Vern**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**EP-A1- 1 647 558**     **US-A- 3 573 246**
**US-A- 6 080 803**

• **DATABASE WPI Week 199923 Thomson**
**Scientific, London, GB; AN 1999-267028**
**XP002779757, & JP H11 80208 A (MITSUBISHI**
**RAYON CO LTD) 26 March 1999 (1999-03-26)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for the production of an elastomer agglomerate composition. The invention also relates to such elastomer agglomerate composition obtained thereby. The invention further relates to thermoplastic copolymers produced using such elastomer agglomerate composition.

In the field of thermoplastic copolymers, certain copolymers comprising one or more elastomeric phase(s) and one or more thermoplastic phase(s) are known to have significant commercial and technical value. The presence of such multiple phases provides a means for introduction of desirable properties of the materials present in each of the phases into a single polymeric system. Such copolymers may have a very desirable balance of properties, rendering them useful for conversion into a wide variety of applications. For example, such copolymers may exhibit a desirable balance of material properties such as: mechanical properties, including a desirable impact strength, tensile strength and flexural modulus; thermal properties such as heat deflection temperature; processing properties such as mouldability via injection moulding; and optical properties such as surface gloss and scratch resistance.

Such copolymers comprising one or more elastomeric phase(s) and one or more thermoplastic phase(s) may for example be core-shell copolymers. In the context of the present invention, core-shell copolymers may be understood to be copolymers comprising elastomeric particles dispersed in a matrix of a thermoplastic material, in particular copolymers comprising elastomeric particles dispersed in a matrix of a thermoplastic material where a certain portion of the thermoplastic material is chemically bound to the surface of the elastomeric particles.

Such core-shell copolymers may for example be produced by reacting certain elastomeric particles with certain monomers, in which the monomers both react to form a thermoplastic material as well as react with the elastomeric particles to form polymeric structures of the thermoplastic material that are chemically bound to the elastomeric particles. This ensures that the thermoplastic material forming a thermoplastic phase is compatible with the elastomeric phase. Such compatibility may be understood as to allow for melt processing without phase separation of the elastomeric phase(s) and the thermoplastic phase(s) taking place.

A well-known type of a core-shell copolymers that may be produced using elastomeric particles according to the present invention are acrylonitrile-butadiene-styrene copolymers, further also referred to as ABS copolymers. Such ABS copolymers may be produced by for example emulsion polymerisation processes where polybutadiene particles act as the elastomeric particles, which may react with a mixture comprising monomers including styrene and acrylonitrile to form an ABS copolymer.

Other examples of such core-shell copolymers include methacrylate butadiene styrene copolymers, acrylonitrile styrene butylacrylate copolymers, and styrene butylacrylate copolymers.

In order to achieve the desired balance of material properties of such core-shell copolymers, it is desirable that the elastomeric particles that are used in the production process of the core-shell copolymers have a certain average particle size. However, the processes for production of elastomers, such as for example polybutadiene, poly(styrene-butadiene), poly(acrylonitrile butadiene) and poly (butyl acrylate) commonly result in elastomeric particles having an average particle size that is below such desired average particle size.

Therefore, in order to obtain the elastomeric particles having the desirable average particle size for use in the production of core-shell copolymers such as ABS copolymers, there is a need to modify the elastomeric particles obtained from the processes for production of such elastomeric particles in a way that the average particle size is increased.

There are several known methods of increasing the average particle size of such elastomeric particles. For example, the elastomeric particles may be subjected to a further polymerisation step using the monomer(s) that were used to form the initial elastomeric particles. This is known as the direct-growth approach. A disadvantage of this method is that the polymerisation time that is required to produce elastomeric particles having the desired average particle size for use in the production of core-shell copolymers according to the present invention is significantly longer.

A further method is by chemical agglomeration, such as by reacting the initial elastomeric particles with a chemical, for example acrylic acid, to produce chemically agglomerated elastomeric particles. However, a disadvantage of this method is that it may introduce impurities that may affect the final properties of the core-shell copolymers.

A third method to achieve elastomeric particles having a desired average particle size is by way of pressure agglomeration, wherein the initial elastomeric particles are subjected to a pressure of such nature that particles fuse to form an elastomeric agglomerate composition. Such method can be relatively fast, and does not introduce any further impurities into the elastomeric particles. It is therefore a desirable method to increase the average particle size of elastomeric particles, particularly for the purpose of providing elastomeric particles suitable for use in the production of core-shell copolymers according to the present invention, such as ABS copolymers.

A disadvantage of the pressure agglomeration method however is that the average particle size of the elastomer agglomerates that are obtained using such pressure agglomeration method is difficult to control.

US3573246 describes a method of increasing the average particle size of a synthetic rubber latex by pressure agglomeration as it flows through a zone of restriction. In this case the agglomeration is preceded by the addition of a reinforcing agent. The resin dispersions that are employed as reinforcing agents are compatible with the latex dispersions to be agglomerated and, like the silica, act not as chemical agglomerants but solely to achieve greater hardness and compressive strength in the moldings that are produced from the resulting latex foams. The reinforcing agent is a homopolymer of styrene or a copolymer of a minor proportion of butadiene and a major proportion of styrene.

JP HI 1 80208A, which is directed to a chemical agglomeration and not pressure agglomeration, discloses a method of producing rubber latex which comprises a enlarging a latex particle by adding an acid or an acid anhydride to a small particle rubber latex. Once the small particle rubber latex becomes unstable in the acidic, it is added to enlarged latex obtained in a former enlarging step, and then an acid or an acid anhydride is added thereto.

EP1647558 also discloses a chemical agglomeration process. Also disclosed are processes for making graft copolymer compositions and multimodal polymer compositions using latex emulsions containing enlarged latex particles and uses of the enlarged latex particles, the graft copolymer compositions and multimodal polymer compositions. The process comprises (a) providing a latex emulsion having at least one pH sensitive anionic surfactant and at least one pH insensitive anionic surfactant; and, (b) reducing the pH of the latex emulsion below 7 by performing one of: (i) mixing into the latex emulsion a substance which interacts with water to form an acid; (ii) mixing into the latex emulsion a combination of at least two substances which interact to form an acid; (iii) mixing into the latex emulsion a substance which forms an acid upon exposure to active rays and exposing the latex emulsion to such active rays; and, (iv) any combination of two or more of (i), (ii) and (iii); and (c) allowing the primary latex particles to aggregate into enlarged latex particles, optionally, without mechanical agitation.

US6080803 discloses a process for preparing a coarse polymer dispersion, which employs a combination of chemical agglomeration and pressure agglomeration. The chemical agglomeration is carried out using an agglomerant such as polyethylene glycol. The amount of chemical agglomerants is from about 0.01 to 5 wt%. The temperature in the course of agglomeration is generally in a range from about 10 to 70 °C, preferably from 20 to 50 °C.

FIG. 1A is a cross sectional view of an exemplary, non-limiting embodiment of a valve assembly.

FIG. 1B is an exploded view of the valve assembly of FIG. 1A.

FIG. 2 is a graphical representation of pressure versus volume fraction.

FIG. 3 is a graphical representation of particle diameter versus volume percent.

It is an objective of the present invention to provide a process for the production of an elastomer agglomerate composition in which the above-mentioned and/or other problems are solved.

Accordingly, the present invention provides a process for the production of an elastomer agglomerate composition, comprising the steps of: (a) providing a slurry comprising elastomeric particles in water, wherein the slurry has a temperature of 40 to 80 °C, wherein the elastomeric particles are selected from the group consisting of polybutadiene particles, poly( styrene butadiene) particles comprising at least 50 wt% of units derived from butadiene, poly(acrylonitrile butadiene) particles and combinations thereof, and wherein the slurry is substantially free of chemical agglomerants, preferably the amount of the chemical agglomerants being less than 0.01 wt% with respect to the total of the solids content in the slurry and any chemical agglomerants; and (b) forcing the slurry through an aperture to obtain the elastomer agglomerate composition.

The present invention provides a pressure agglomeration method with a desirable particle size distribution which avoids the use of chemical agglomerants and impurities that may affect the final properties of the core-shell copolymers made from the elastomer agglomerate composition. It was surprisingly found that the use of a slurry having a temperature of 40 to 80 °C allows a broad operating window of the process for obtaining a elastomer agglomerate composition with a desirable particle size distribution.

The term "chemical agglomerant" is herein meant as generally water-soluble or water-dispersible polymers based on hydrophilic monomers, such as polyacrylamide, polymethacrylamide, polyvinyl esters of Cl -C18 carboxylic acids, examples being polyvinyl formate, polyvinyl acetate, polyvinyl propionate, polyvinyl n-butyrate, polyvinyl laurate and polyvinyl stearate, polyethers, such as polyalkylene glycols, and combinations thereof.

The average particle size and the particle size distribution of the elastomeric particles in the slurry or of the elastomer agglomerates in the elastomer agglomerate composition may be determined. In the context of the present invention, the average particle size is understood to be the $D_{50}$ particle size as determined in accordance with ISO 9276-2:2014. The particle size distribution is determined by a Beckman Coulter multi-wavelength laser diffraction particle size analyser type LS 13320 in accordance with ISO 13320.

Step (a)

Slurry

The elastomeric particles used in the process of the present invention are selected from the group consisting of polybutadiene particles, poly(styrene butadiene) particles comprising at least 50 wt% of units derived from butadiene, poly(acrylonitrile butadiene) particles and polybutylacrylate particles and combinations thereof. When the elastomeric particles comprise poly(styrene butadiene) particles, the poly(styrene butadiene) particles preferably comprise at least 60 wt%, at least 70 wt%, at least 80 wt% or at least 90 wt% of units derived from butadiene.

Preferably, the elastomeric particles are polybutadiene particles.

The elastomeric particles in the slurry (i.e., the unhomogenized particles) have an average particle size, $D_{50}$, prior to homogenization, e.g., an original $D_{50}$. The elastomeric particles have an average particle size of at most 150 nm, more preferably at most 130 nm or even more preferably at most 120 nm, for example 80 to 120 nm. Use of such elastomeric particles has an advantage in that the need for lengthy polymerisation of the monomers to obtain the elastomeric particles is avoided.

The particle size distribution of the elastomeric particles is not critical, but typically the volume fraction of particles with particle size smaller than 214 nm in the slurry is at least 90%.

The slurry that is used in the process according to the present invention may comprise at least 20 wt% of elastomeric particles, preferably at least 20 wt% and at most 70 wt%, more preferably at least 30 wt% and at most 60 wt%, even more preferably at least 30 wt% and at most 50 wt%, with regard to the total weight of the slurry.

Preferably, the slurry that is used in the process according to the present invention comprises at least 20 wt% of elastomeric particles, preferably at least 20 wt% and at most 70 wt%, more preferably at least 30 wt% and at most 60 wt%, even more preferably at least 30 wt% and at most 50 wt%, with regard to the total weight of the slurry, wherein the elastomeric particles consist of polybutadiene particles.

The slurry is preferably an aqueous emulsion. The slurry may further comprise an emulsifier for ensuring the slurry to be in the form of an aqueous emulsion. Such aqueous emulsion may also be referred to as a latex. For the avoidance of doubt, an emulsifier is herein not considered as a chemical agglomerant.

The amount of the emulsifier may e.g. be 0.05 to 15% wt%, preferably 0.1 to 10 wt%, 0.2 to 5 wt% or 0.5 to 3 wt%, with respect to the elastomeric particles.

Suitable emulsifiers are those emulsifiers which are known to the skilled worker and are commonly employed as dispersants in the context of aqueous emulsion polymerization; such emulsifiers are described, for example, in Houben-Weyl, Methoden der organischen Chemie, Volume XIV/1, Makromolekulare Stoffe [Macromolecular substances], Georg-ThiemeVerlag, Stuttgart, 1961, pp. 411-420. Anionic, cationic and nonionic emulsifiers are suitable. Preference is given to using anionic emulsifiers, and especially soaps.

Suitable anionic emulsifiers E are the salts of C8 -C18 fatty acids with alkali metals, such as Na and K, with ammonium, with volatile amines, such as triethylamine ethanolamine, diethanolamine, triethanolamine and morpholine, etc., and with divalent and trivalent cations, such as calcium, magnesium, aluminum, etc., for example. Examples of further suitable anionic emulsifiers are alkali metal and ammonium salts of alkyl sulfates ( alkyl: C8 - C22), of sulfuric monoesters with ethoxylated alkanols (EO units: 2 to 50, alkyl: C12 -C18) and ethoxylated alkylphenols (EO units: 3 to 50, alkyl: C4 -C9), of alkylsulfonic acids (alkyl: C12 - C18) and of alkylarylsulfonic acids (alkyl: C9 -C18). Further suitable emulsifiers are given in Houben-Weyl, loc.cit. pp. 192-208).

Preferred emulsifiers are the sodium or potassium soaps of palmitic, margaric, stearic, palmitoleic and oleic acid and the resin soaps (resinates), such as the sodium or potassium salts of ricinoleic, abietic and pimaric acid, etc. Potassium salt of tallow fatty acid or potassium oleate is the preferred emulsifier employed.

Slurry temperature

The slurry provided in step (a) to be forced through an aperture in step (b) has a temperature of 40 to 80 °C, preferably 45 to 80 °C, more preferably 50 to 70 °C.

Step b)

In step (b ), the slurry comprising the elastomer particles is forced through an aperture. By going through the aperture, the elastomer particles agglomerate to provide a elastomer agglomerate composition comprising elastomer agglomerates.

The slurry is forced through the aperture at a certain pressure. For example, the slurry may be forced through the aperture at a pressure of at least 400 bar, for example at least 500 bar, at least 600 bar, at least 700 bar or at least 800 bar. Particularly preferably, the slurry is forced through the aperture at a pressure of at least 850 bar, for example 850 to 1000 bar.

The slurry may be forced through the aperture at a flow velocity of at least 3 m/s, for example 5 to 15 m/s

Preferably, the slurry is forced through the aperture at a flow velocity of at least 500 m/s, more preferably at least 600 m/s, more preferably at least 700 m/s, such as at least 700 m/s and at most 1000 m/s.

Preferably, step b) is performed using a valve assembly comprising a valve and a seat that are arranged opposite each other to provide a flow channel for the slurry with an emulsifying flow channel section that is provided with the aperture, wherein the emulsifying flow channel section is arranged at a sharp angle with respect to an axial center line of the valve in a cross sectional view of the valve assembly.

Preferably, the flow channel has a Y-shaped cross section.

Preferably, the valve has a cone-shaped surface that is directed towards the seat.

Preferably, the emulsifying flow channel section has a first width, as seen in a direction perpendicular to a flow of the slurry, that is adjustable by moving the valve and the seat with respect to each other.

Preferably, the flow channel has an inlet flow channel section having a second width, as seen in the direction perpendicular to the flow of the slurry, that is larger than the first width when the valve assembly is in use.

The angle of the emulsifying flow channel section with respect to the axial center line of the valve is less than 90°, for example less than 85°, 10° to 80°, 20° to 70°, 30° to 60°, 40° to 50°.

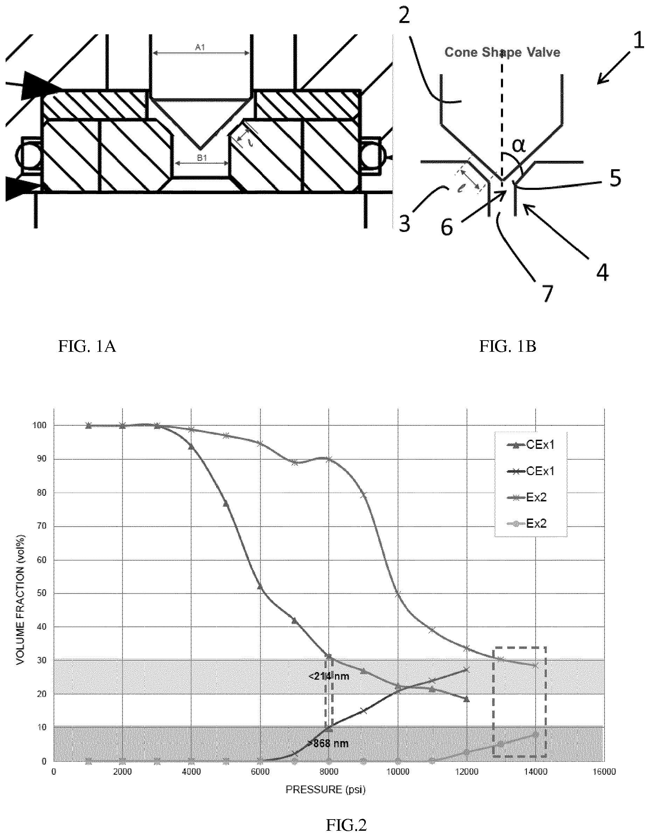

Figure 1 shows a cross sectional view of an exemplary, non-limiting embodiment of a valve assembly 1 that may be used in certain embodiments of the present invention. The valve assembly 1 comprises a valve 2 and a seat 3 that are arranged opposite each other to provide a flow channel 4 for the slurry with an emulsifying flow channel section 5 that is provided with the aperture 6. The emulsifying flow channel section 5 is arranged at a sharp angle $\alpha$ with respect to an axial center line of the valve 2. Figure 1 shows that the flow channel 4 of the exemplary embodiment of the valve assembly 1 has a Y-shaped cross section. The valve 2 of the valve assembly 1 has a cone-shaped surface that is directed towards the seat 3 to provide the flow channel 4 with the emulsifying flow channel section 5. In use of the valve assembly 1, the slurry enters the emulsifying flow channel section 5 via the aperture 6. The emulsifying flow channel section 5 has a first width, as seen in a direction perpendicular to a flow of the slurry. The first width is adjustable by moving the valve 2 and the seat 3 with respect to each other. The flow channel 4 has an inlet flow channel section 7 that has a second width, as seen in the direction perpendicular to the flow of the slurry. When the valve assembly 1 is in use the second width is larger than the first width.

In this embodiment, the valve diameter Al was 6.84 mm, the inner bore diameter of the seat was 1.8 mm and the emulsifying flow channel section was 2 mm.

Elastomer agglomerate composition

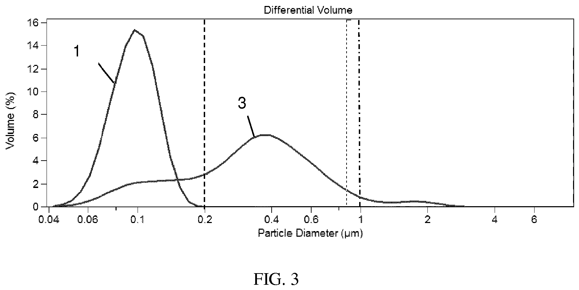

In order to achieve balanced flow/impact and other properties of the final core-shell copolymer, it is desired that the elastomer agglomerate composition has a relatively small portion of very small particles ( e.g., underhomogenized portion) and a relatively small portion of very large particles (e.g., overhomogenized portion). The underhomogenized portion refers to that portion of the original particles that did not agglomerate. For example, referring to FIG. 3, line 1 illustrates the unhomogenized elastomeric particles (e.g., the original particles in the slurry). All of the unhomogenized elastomeric particles have a size of less than 200 nm. Hence the underhomogenized particles are considered to be those having a size of less than 200 nm. The overhomogenized portion refers to the portion of the homogenized particles that have a size of greater than or equal to ten (preferably nine, more preferably eight) times the average particle size of the unhomogenized particles:

$$\text{overhomogenized portion} = 10(D_{50} \text{ of unhomogenized particles})$$

In the example in FIG. 3, $D_{50}$ of line 1 (the unhomogenized particles) would be 100 nm, with a particle distribution of 40 nm to 200 nm. The underhomogenized particles would have a particle size of at most, 200 nm, and the overhomogenized particles would have a particle size of greater than or equal to 1000 nm, preferably 900 nm.

The elastomer agglomerate composition has at most 40 vol%, preferably at most 30 vol% underhomogenized particles, based upon a total volume of the elastomer agglomerate composition.

The elastomer agglomerate composition has at most 10 vol%, preferably at most 8 vol% overhomogenized particles, based upon a total volume of the elastomer agglomerate composition.

For example, the volume fraction of particles with particle size smaller than 214 nm in the elastomer agglomerate composition is preferably relatively small. For example, the volume fraction of particles with particle size smaller than 214 nm in the elastomer agglomerate composition is at most 50%, more preferably at most 40%, even more preferably at most 30%, for example 10 to 30% or 20 to 30%. This leads to a better impact strength of the graft copolymer made using the elastomer agglomerate composition. This further improves the processing stability of the graft copolymers.

For example, the volume fraction of particles with particle size larger than 868 nm in the elastomer agglomerate composition is preferably relatively small. For example, the volume fraction of particles with particle size larger than 868 nm in the elastomer agglomerate composition is at most 15%, more preferably at most 10%. This leads to a desirable melt flow of the graft copolymer produced using the elastomer agglomerates. This also avoids detrimental effect to the opacity of the graft copolymer.

In preferred embodiments, the volume fraction of particles with particle size smaller than 214 nm in the elastomer agglomerate composition is 10 to 30 % or 20 to 30% and the volume fraction of particles with particle size larger than 868 nm in the elastomer agglomerate composition is at most 10%. Such composition demonstrates a desirable narrow particle size distribution that is beneficial for providing the desired material properties to the graft copolymer produced using the elastomer agglomerates, as well as for providing the desired processability properties.

Preferably, the elastomer agglomerates in the elastomer agglomerate composition have an average particle size of at least 150 nm, or at least 250 nm, such as at least 150 and at most 1000 nm or at least 250 and at most 1000 nm. More preferably, the elastomeric particles have an average particle size of at least 200 nm and at most 500 nm, or at least 250 nm and at most 400 nm. Such composition is beneficial for providing the desired material properties to the graft copolymer produced using the elastomer agglomerates, as well as for providing the desired processability properties.

Further aspects

The elastomer agglomerate composition obtained according to the process of the invention may for example be used in a further polymerisation process, such as in the production of elastomer-reinforced thermoplastic copolymers, such as graft copolymers, via emulsion polymerisation.

For example, the elastomer agglomerate composition can be added to a reaction vessel and heated. Styrene can be added to the vessel, allowing an optional pre-soak before the addition of an initiator (e.g., cumene hydroperoxide initiator), optionally over a period of time.
Acrylonitrile and styrene feeds can also be added to the reaction vessel, e.g., after the addition of the initiator has started. Optionally, the acrylonitrile and the styrene can also be added over a period of time. An example of polymerization processes are disclosed in US Patent No. 6,784,253.

In a specific example, an initial charge of a polybutadiene emulsion can be added to a three liter reaction vessel and heated to 57.2°C. Next 12.06 parts by weight of styrene can be added to the reaction vessel as a "pre-soak". After a pre-soak of about 20 minutes an addition of 0.375 parts of cumene hydroperoxide initiator can be started. The initiator can be added to the reaction vessel over a period of 70 minutes. Five minutes after starting the initiator addition, a feed of 12.05 parts of acrylonitrile can be started. The acrylonitrile can be added to the reaction vessel over a period of 65 minutes. Ten minutes after the start of the initiator addition, a feed of 24.09 parts of styrene can be started. The styrene can be added to the reaction vessel over a period of 60 minutes.

The present invention also relates to the elastomer agglomerate composition obtained by or obtainable by the process according the invention.

The present invention also relates to the use of the elastomer agglomerate composition according to the invention in the production of acrylonitrile-butadiene-styrene copolymers, methacrylate butadiene styrene copolymers, acrylonitrile styrene butylacrylate copolymers, or styrene butylacrylate copolymers.

The present invention also relates to acrylonitrile-butadiene-styrene copolymers, methacrylate butadiene styrene copolymers, acrylonitrile styrene butylacrylate copolymers, or styrene butylacrylate copolymers produced using the elastomer agglomerate composition according to the invention.

The present invention also relates to a process for the production of a copolymer selected from the group consisting of acrylonitrile-butadiene-styrene copolymers, methacrylate butadiene styrene copolymers, acrylonitrile styrene butylacrylate copolymers, or styrene butylacrylate copolymers, comprising the process for the production of an elastomer agglomerate composition according to the invention and producing the copolymer from the elastomer agglomerate composition preferably via emulsion polymerization.

Although the below examples are directed to polybutadiene particles, this invention applies to other type of elastomers, i.e. nitrile rubber, styrene-butadiene rubber (SBR), polybutylacrylate rubber, etc. Not to be limited to theory, even though these rubbers have different chemical properties, the interactions between particles are still governed by electrostatic repulsion and van der Waals attraction. Under static conditions, the latex particles in the examples are stabilized or prevented from agglomeration due to electrostatic repulsion from their charged surfaces. This electrostatic surface charge is a result of adsorbed surfactants used in the production of the latex. The homogenizer imparts energy to the latex dispersion thus causing the particles to overcome the energy of repulsion leading to attraction and ultimately agglomeration. Manipulation of the process conditions with different valve configuration or geometry allows the control of the energy dissipation distribution and ultimately the particle size distribution.

The present invention also relates to the copolymer obtained by or obtainable by the process according to the invention for the production of the copolymer.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process. Unless specified to the contrary herein, all test standards (including ISO, ASTM, etc.) are the most recent standard in effect as of October 12, 2017.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

Examples

To 13800 g of polybutadiene latex with 38.52 wt% total solids, 292 g of tallow fatty acid potassium salt soap with 10% total solids was added and stirred well. Additional 154 g of DI water was added to obtain a final latex with 37 .5 wt% total solids with 0.9 wt% total soap.

The particle size distribution of this slurry was determined by a Beckman Coulter multi-wavelength laser diffraction particle size analyser type LS 13320 according to ISO 13320.

The slurry was fed to a homogenizer at room temperature (23.9 °C) or 51.7 °C. The homogenizer has a valve illustrated in Figure 1, through which the latex was passed to obtain an elastomer agglomerate composition. The pressure of the slurry was varied as shown in Figure 2.

The particle size distribution of these elastomer agglomerate compositions was determined by a Beckman Coulter multi-wavelength laser diffraction particle size analyser type LS 1332013320 according to ISO 13320.

The volume fraction of particles with particle size smaller than 214 nm (also referred herein as <214 nm portion) and the volume fraction of particles with particle size smaller than larger than 868 nm (also referred herein as >868 nm portion) were monitored against the pressure change of the homogenization process as shown in Figure 2.

In both the slurry and the elastomer agglomerate composition, the increase in the pressure leads to a decrease in the <214 nm portion and an increase in the >868 nm portion. A higher pressure is required for obtaining larger agglomerates when the latex is fed at a higher temperature.

To achieve an ideally balanced flow/impact and other properties, it is desirable that the <214 nm portion is in between 20 - 30% and the >868 nm portion is less than 10%.

When the latex was fed at room temperature, at 8000 psi (55 MPa), the <214 nm portion is slightly greater than 30 vol% while the >868 nm portion is close to 10 vol%. At lower pressures, the <214 nm portion is large. At higher pressures, the >868 nm portion is large. Therefore, the operating window for obtaining an agglomerate composition with an ideal particle size distribution is very limited.

In contrast, when the latex was fed at 51.7 °C, an ideal particle size distribution is obtained at 13000 psi (90 MPa) and at 14000 psi (97 MPa). Therefore, the operating window for obtaining an agglomerate composition with an ideal particle size distribution is wider.

**Claims**

1. A process for the production of an elastomer agglomerate composition using pressure agglomeration, comprising:

   (a) providing a slurry comprising elastomeric particles in water, wherein the slurry has a temperature of 40 to 80 °C, wherein the elastomeric particles are selected from the group consisting of polybutadiene particles, poly(styrene butadiene) particles comprising at least 50 wt% of units derived from butadiene, poly(acrylonitrile butadiene) particles and combinations thereof, and wherein the slurry is substantially free of chemical agglomerants; wherein the elastomeric particles have an average particle size $D_{50}$, as is determined in accordance with ISO 9276-2:2014, of at most 150 nm; and
   (b) forcing the slurry through an aperture to obtain the elastomer agglomerate composition,

   wherein the elastomer agglomerate composition has at most 40 vol% of at least one of an underhomogenized portion and particles having a size of at most 200 nm based upon a total volume of the elastomer agglomerate composition; and
   wherein the elastomer agglomerate composition has at most 10 vol% overhomogenized portion, based upon a total volume of the elastomer agglomerate composition.

2. The process according to any one of the preceding claims, wherein the slurry provided in step (a) has a temperature of 45 to 80 °C.

**3.** The process according to claim 1, wherein the elastomeric particles are polybutadiene particles.

**4.** The process according to any one of the preceding claims, wherein the amount of the elastomeric particles in the slurry is at least 20.0 wt% with regard to the total weight of the slurry.

**5.** The process according to any one of the preceding claims, wherein the slurry further comprises an emulsifier at an amount of 0. 05 to 15 wt%, preferably 0.1 to 10 wt%, 0 .2 to 5 wt% or 0.5 to 3 wt%, with respect to the elastomeric particles. The slurry provided in step (a) to be forced through an aperture in step (b) has a temperature of 40 to 80 °C, preferably 45 to 80 °C.

**6.** The process according to any one of the preceding claims, wherein the slurry is forced through the aperture at a pressure of at least 400 bar, at least 500 bar or at least 700 bar.

**7.** The process according to any one of the preceding claims, wherein the slurry is forced through the aperture at a pressure of at least 850 bar, for example 850 to 1000 bar.

**8.** The process according to any one of the preceding claims, the slurry is forced through the aperture at a flow velocity of at least 3 m/s, for example 5 to 15 m/s.

**9.** The process according to any one of the preceding claims, the slurry is forced through the aperture at a flow velocity of at least 500 m/s, more preferably at least 600 m/s, more preferably at least 700 m/s, such as at least 700 m/s and at most 1000 m/s.

**10.** The process according to any one of the preceding claims, wherein step b) is performed using a valve assembly comprising a valve and a seat that are arranged opposite each other to provide a flow channel for the slurry with an emulsifying flow channel section that is provided with the aperture, wherein the emulsifying flow channel section is arranged at a sharp angle with respect to an axial center line of the valve in a cross sectional view of the valve assembly.

**11.** The process according to any one of the preceding claims, wherein the volume fraction of particles with particle size smaller than 214 nm in the elastomer agglomerate composition is 10 to 30 % or 20 to 30 % and the volume fraction of particles with particle size larger than 868 nm in the elastomer agglomerate composition is at most 10%; wherein the wherein the particle size distribution was measured according to ISO 13320.

**12.** The elastomer agglomerate composition obtained by or obtainable by the process according to any one of claims 1-11.

**13.** Use of the elastomer agglomerate composition according to claim 12 in the production of acrylonitrile-butadiene-styrene copolymers, methacrylate butadiene styrene copolymers, acrylonitrile styrene butylacrylate copolymers, or styrene butylacrylate copolymers.

**14.** A method for forming a graft copolymer, comprising: heating the elastomer agglomerate composition according to claim 13, and reacting the elastomer agglomerate composition with styrene and acrylonitrile to form the graft copolymer.

**Patentansprüche**

**1.** Prozess für die Produktion einer Elastomeragglomeratzusammensetzung unter Verwendung von Druckagglomeration, umfassend:

(a) Bereitstellen eines Slurrys, das Elastomerteilchen in Wasser umfasst, wobei das Slurry eine Temperatur von 40 bis 80 °C hat, wobei die Elastomerteilchen ausgewählt sind aus der Gruppe bestehend aus Polybutadienteilchen, Poly(styrolbutadien)teilchen, die mindestens 50 Gew.-% von Einheiten umfassen, die von Butadien abgeleitet sind, Poly(acrylnitrilbutadien)teilchen und Kombinationen davon, und wobei das Slurry im Wesentlichen frei von chemischen Agglomeraten ist; wobei die Elastomerteilchen eine durchschnittliche Teilchengröße $D_{50}$, bestimmt gemäß ISO 9276-2:2014, von höchstens 150 nm aufweisen; und
(b) Drängen des Slurrys durch eine Öffnung, um die Elastomeragglomeratzusammensetzung zu erhalten,

wobei die Elastomeragglomeratzusammensetzung höchstens 40 Vol.-% von mindestens einem unterhomogenisierten Abschnitt und Teilchen mit einer Größe von höchstens 200 nm, basierend auf einem Gesamtvolumen der Elastomeragglomeratzusammensetzung, aufweist; und
wobei die Elastomeragglomeratzusammensetzung höchstens 10 Vol.-% überhomogenisierten Abschnitt, basierend auf einem Gesamtvolumen der Elastomeragglomeratzusammensetzung, aufweist.

2.  Prozess nach einem der vorhergehenden Ansprüche, wobei das Slurry, das in Schritt (a) bereitgestellt wird, eine Temperatur von 45 bis 80 °C hat.

3.  Prozess nach Anspruch 1, wobei die Elastomerteilchen Polybutadienteilchen sind.

4.  Prozess nach einem der vorhergehenden Ansprüche, wobei die Menge der Elastomerteilchen im Slurry mindestens 20,0 Gew.-% in Bezug auf das Gesamtgewicht des Slurrys beträgt.

5.  Prozess nach einem der vorhergehenden Ansprüche, wobei das Slurry ferner einen Emulgator in einer Menge von 0,05 bis 15 Gew.-%, bevorzugt 0,1 bis 10 Gew.-%, 0,2 bis 5 Gew.-% oder 0,5 bis 3 Gew.-%, in Bezug auf die Elastomerteilchen umfasst. Das Slurry, das in Schritt (a) bereitgestellt wird, das durch eine Öffnung in Schritt (b) gedrängt werden soll, hat eine Temperatur von 40 bis 80 °C, bevorzugt 45 bis 80 °C.

6.  Prozess nach einem der vorhergehenden Ansprüche, wobei das Slurry durch die Öffnung bei einem Druck von mindestens 400 bar, mindestens 500 bar oder mindestens 700 bar gedrängt wird.

7.  Prozess nach einem der vorhergehenden Ansprüche, wobei das Slurry durch die Öffnung bei einem Druck von mindestens 850 bar, zum Beispiel 850 bis 1000 bar, gedrängt wird.

8.  Prozess nach einem der vorhergehenden Ansprüche, wobei das Slurry durch die Öffnung bei einer Fließgeschwindigkeit von mindestens 3 m/s, zum Beispiel 5 bis 15 m/s, gedrängt wird.

9.  Prozess nach einem der vorhergehenden Ansprüche, wobei das Slurry durch die Öffnung bei einer Fließgeschwindigkeit von mindestens 500 m/s, bevorzugter mindestens 600 m/s, bevorzugter mindestens 700 m/s, wie z. B. mindestens 700 m/s und höchstens 1000 m/s, gedrängt wird.

10. Prozess nach einem der vorhergehenden Ansprüche, wobei Schritt b) unter Verwendung einer Ventilanordnung durchgeführt wird, die ein Ventil und einen Sitz umfasst, die einander gegenüber angeordnet sind, um einen Strömungskanal für das Slurry mit einem emulgierenden Strömungskanalabschnitt bereitzustellen, der mit der Öffnung bereitgestellt ist, wobei der emulgierende Strömungskanalabschnitt in einem spitzen Winkel in Bezug auf eine axiale Mittellinie des Ventils in einer Querschnittsansicht der Ventilanordnung angeordnet ist.

11. Prozess nach einem der vorhergehenden Ansprüche, wobei der Volumenanteil von Teilchen mit einer Teilchengröße von weniger als 214 nm in der Elastomeragglomeratzusammensetzung 10 bis 30 % oder 20 bis 30 % beträgt und der Volumenanteil von Teilchen mit Teilchengrößen von mehr als 868 nm in der Elastomeragglomeratzusammensetzung höchstens 10 % beträgt; wobei die wobei die Teilchengrößenverteilung gemäß ISO 13320 gemessen wurde.

12. Elastomeragglomeratzusammensetzung, die durch den Prozess nach einem der Ansprüche 1-11 erhalten wird oder erhalten werden kann.

13. Verwendung der Elastomeragglomeratzusammensetzung nach Anspruch 12 bei der Produktion von Acrylnitril-Butadien-Styrol-Copolymeren, Methacrylat-Butadien-Styrol-Copolymeren, Acrylnitril-Styrol-Butylacrylat-Copolymeren oder Styrol-Butylacrylat-Copolymeren.

14. Verfahren zum Bilden eines Pfropfcoplymers, umfassend: Erhitzen der Elastomeragglomeratzusammensetzung nach Anspruch 13 und Reagieren der Elastomeragglomeratzusammensetzung mit Styrol und Acrylnitril, um das Pfropfcopolymer zu bilden.

**Revendications**

1.  Processus pour la production d'une composition d'agglomérat d'élastomère à l'aide d'une agglomération par pression, comprenant :

(a) la fourniture d'une suspension épaisse de particules élastomères dans de l'eau, dans lequel la suspension épaisse a une température de 40 à 80 °C, dans lequel les particules élastomères sont choisies dans le groupe constitué par des particules de polybutadiène, des particules de poly(styrène butadiène) comprenant au moins 50 % en poids de motifs dérivés du butadiène, des particules de poly(acrylonitrile butadiène) et leurs combinaisons, et dans lequel la suspension épaisse est sensiblement dépourvue d'agglomérants chimiques ; dans lequel les particules élastomères ont une taille moyenne de particule $D_{50}$, telle que déterminée conformément à la norme ISO 9276-2:2014, d'au plus 150 nm ; et

(b) la poussée de la suspension épaisse à travers une ouverture pour obtenir la composition d'agglomérat d'élastomère,

dans lequel la composition d'agglomérat d'élastomère a au plus 40 % en volume d'au moins l'une parmi une portion sous-homogénéisée et des particules ayant une taille d'au plus 200 nm sur la base d'un volume total de la composition d'agglomérat d'élastomère ; et

dans lequel la composition d'agglomérat d'élastomère a au plus 10 % en volume d'une portion sur-homogénéisée, sur la base d'un volume total de la composition d'agglomérat d'élastomère.

2. Processus selon l'une quelconque des revendications précédentes, dans lequel la suspension épaisse fournie à l'étape (a) a une température de 45 à 80 °C.

3. Processus selon la revendication 1, dans lequel les particules élastomères sont des particules de polybutadiène.

4. Processus selon l'une quelconque des revendications précédentes, dans lequel la quantité des particules élastomères dans la suspension épaisse est d'au moins 20,0 % en poids vis-à-vis du poids total de la suspension épaisse.

5. Processus selon l'une quelconque des revendications précédentes, dans lequel la suspension épaisse comprend en outre un émulsifiant à une quantité de 0,05 à 15 % en poids, de préférence de 0,1 à 10 % en poids, de 0,2 à 5 % en poids ou de 0,5 à 3 % en poids, par rapport aux particules élastomères. La suspension épaisse fournie à l'étape (a) à pousser à travers une ouverture à l'étape (b) a une température de 40 à 80 °C, de préférence de 45 à 80 °C.

6. Processus selon l'une quelconque des revendications précédentes, dans lequel la suspension épaisse est poussée à travers l'ouverture à une pression d'au moins 400 bar, d'au moins 500 bar ou d'au moins 700 bar.

7. Processus selon l'une quelconque des revendications précédentes, dans lequel la suspension épaisse est poussée à travers l'ouverture à une pression d'au moins 850 bar, par exemple de 850 à 1000 bar.

8. Processus selon l'une quelconque des revendications précédentes, dans lequel la suspension épaisse est poussée à travers l'ouverture à une vitesse d'écoulement d'au moins 3 m/s, par exemple de 5 à 15 m/s.

9. Processus selon l'une quelconque des revendications précédentes, dans lequel la suspension épaisse est poussée à travers l'ouverture à une vitesse d'écoulement d'au moins 500 m/s, de manière davantage préférée d'au moins 600 m/s, de manière davantage préférée d'au moins 700 m/s, telle qu'au moins 700 m/s et au plus 1000 m/s.

10. Processus selon l'une quelconque des revendications précédentes, dans lequel l'étape b) est réalisée à l'aide d'un ensemble valve comprenant une valve et un siège qui sont agencés opposés l'un à l'autre pour fournir un canal d'écoulement pour la suspension épaisse avec une section de canal d'écoulement d'émulsifiant qui est munie de l'ouverture, dans lequel la section de canal d'écoulement d'émulsifiant est agencée selon un angle aigu par rapport à une ligne centrale axiale de la valve dans une vue en section transversale de l'ensemble valve.

11. Processus selon l'une quelconque des revendications précédentes, dans lequel la fraction volumique de particules ayant une taille de particule inférieure à 214 nm dans la composition d'agglomérat d'élastomère est de 10 à 30 % ou de 20 à 30 % et la fraction volumique de particules ayant une taille de particule supérieure à 868 nm dans la composition d'agglomérat d'élastomère est d'au plus 10 % ; dans lequel la distribution de tailles de particule a été mesurée selon la norme ISO 13320.

12. Composition d'agglomérat d'élastomère obtenue par le processus selon l'une quelconque des revendications 1 à 11.

**13.** Utilisation de la composition d'agglomérat d'élastomère selon la revendication 12 dans la production de copolymères acrylonitrile-butadiène-styrène, de copolymères méthacrylate butadiène styrène, de copolymères acrylonitrile styrène acrylate de butyle, ou de copolymères styrène acrylate de butyle.

**14.** Procédé de formation d'un copolymère greffé, comprenant : le chauffage de la composition d'agglomérat d'élastomère selon la revendication 13, et la réaction de la composition d'agglomérat d'élastomère avec du styrène et de l'acrylonitrile pour former le copolymère greffé.

FIG. 1A                                    FIG. 1B

FIG.2

EP 3 694 893 B1

Differential Volume

FIG. 3

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3573246 A
- JP HL180208 A
- EP 1647558 A
- US 6080803 A
- US 6784253 B

**Non-patent literature cited in the description**

- Makromolekulare Stoffe [Macromolecular substances. **HOUBEN-WEYL.** Methoden der organischen Chemie. Georg-ThiemeVerlag, 1961, vol. XIV, 411-420